# EUROPEAN PATENT APPLICATION

(11) **EP 4 696 863 A2**
(43) Date of publication of application: **18.02.2026**
(21) Application number: 25225041.0
(22) Date of filing: 27.12.2023
(51) Int. Cl.: E21B 41/00

(54) **DEVICE, SYSTEM AND METHOD FOR REMOVAL OF CABLE CLAMPS FROM A PIPE STRING**

(30) Priority: 27.12.2022 NO 20221409
(62) Divisional of application: 23847906.7
(71) Applicant: Odfjell Technology Invest Ltd, Hamilton, HM 11 (BM)
(72) Inventor: Lars Harald, Norheim, 4028 Stavanger (NO); Svein, Krosli, 4076 Vassøy (NO)
(74) Representative: Håmsø Patentbyrå AS

(57) **Abstract**

A collection device (600) for catching portions of a cable clamp (120) cut from a pipe string (100), the collection device (600) comprising: a main body comprising (610): an upper rim (619); and a lower rim (611) configured to receive the pipe string (100), wherein the upper rim (619) has a first cross-dimension; the lower rim (611) has a second cross-dimension; and the first cross-dimension is larger than the second cross-dimension

## Description

### FIELD

The present invention relates to a device, system and method for removal of cable clamps from a pipe string in a hydrocarbon well. More specifically, the invention relates to providing a solution for removal of cable clamps, allowing for fewer personnel to be required within a hazardous area of a facility.

### BACKGROUND

Oil and gas exploration and production require the provision of long strings of pipe to be delivered to the wellbore for periods of time. Often, one or more cables run in parallel to and on the outside of the pipe string. The pipe string may typically be a completion string used in the production stage of the well. However, it will be understood that cables may be provided parallel to and on the outside of other pipe strings throughout the complex operation of forming, maintaining and producing from a reservoir.

The cables will normally be cables for the transmission of power and communication between the surface and components/equipment in the well. For example, a flow control device located within the string may be provided with hydraulic pressure via a hydraulic cable attached to the outside of the pipe string. Another piece of equipment, such as a sensor, may be provided with electrical power through an electrical cable attached to the outside of the pipe string.

The term cable is used herein to generally refer to any form of cable which may carry any substance to a point on the pipe string. In this connection, the cable may carry air, water, oil, hydraulic fluid, hydrocarbon samples, wellbore fluid samples, injection fluids, pressurised fluids, electricity, electronic communications signals, as non-limiting examples only.

For such cables not to hang loosely, the cables must be fastened to the pipe string. The fastening is usually done by means of a hinge or clamp which is clamped around the pipe string and secured by means of one or more bolts. The fastening is usually done at the transition between two pipes in the string at a threaded sleeve between two pipes.

Patent document US 5379836 discloses an example of such a clamp. The clamp described therein comprises first and second clamping elements for clamping around the pipe string. The elements are mutually hinged at one side and provided with fastening means at the opposite side. Typically, the fastening means is a plurality of bolts. Some variations on this design have been used for many years.

In this connection, the method of operation of such a clamp is that the clamp is attached to the string as the string is being delivered in the wellbore. The clamp remains on the outside of the pipe string whilst the string is in the wellbore. The clamp is therefore exposed to a very extreme environment, often comprising harsh chemicals, production fluids, extreme temperatures and pressures, sand, cement, debris and wellbore junk. Further, the clamp may rub off of wellbore infrastructure or the exposed wellbore itself, in some instances. Upon retrieval of the pipe string from the well, the clamps need to be removed for the separation of cables from the pipe string.

Therefore, using prior art clamps the clamps often return to the surface (when the string is pulled out of the wellbore) with the clamps and/or the fastening means is a damaged state. As previously stated, the fastening means may typically be bolts or another standard mechanical connecting means. When bolts are used, the sockets in the bolt heads can often be so worn that it is difficult or impossible to remove the bolt by means of unscrewing. Today, attempts at unscrewing are performed manually. If the bolts cannot eventually be removed by unscrewing, then the bolts, or other parts of the clamp (depending on its design), must be chiseled away, which is very time-consuming. The clamp removal, both by normal unscrewing of the bolts and by "brute force" using chiselling or another means, takes place with the pipe string protruding upwards from the wellbore, i.e. with the pipe string held in slips for example. It is highly desirable to reduce the amount of work that is performed at the mouth of an open wellbore to reduce the risk of items dropping into the wellbore. Dropped items can cause significant delays to the operation and can be extremely costly to locate and remove from the wellbore. Furthermore, the removal of the clamps is performed in the so-called "red zone". The red zone is a relatively small space on the rig floor which comprises moving heavy equipment. Furthermore, in some stages of the operation, the red zone may comprise flammable chemicals and therefore has a heightened risk of explosion. It is generally accepted that personnel in the red zone should be only those absolutely required for the present operation and time spent in the red zone should be minimised where possible. The red zone is usually said to have the highest HSE risk of anywhere in the facility. Therefore, it is highly desirable to provide fast and effective removal of the clamps where possible.

The invention has for its object to remedy or to reduce at least one of the drawbacks of the prior art, or at least provide a useful alternative to prior art.

The object is achieved through features, which are specified in the description below and in the claims that follow.

### SUMMARY

The invention is defined by the independent patent claims. The dependent claims define advantageous embodiments of the invention.

According to a first aspect of the invention, there is provided a moveable cutting device for providing automated removal of a cable clamp from a pipe string, the cutting device comprising: an attachment means configured to attach the cutting device to a manipulator for moving and/or operating the cutting device in use; and a cutting means configured in use to be operated to cut a portion of a cable clamp such that the cable clamp is released from the pipe string.

Advantageously, this reduces the number of personnel required in the red zone on the deck immediately around the open well. Furthermore, this may provide a faster and/or more reliable means of releasing the cable clamp.

Optionally, the cutting means is configured in use to be operated by the manipulator to cut a portion of the cable clamp.

Advantageously, this further reduces the number of personnel required in the red zone on the deck immediately around the open well.

Optionally, the attachment means is configured to attach the cutting device to a manipulator arm of the manipulator.

Advantageously, the manipulator arm may allow the manipulator to be located further away from the well, reducing the amount of equipment located above the well.

Optionally, the attachment means is configured to attach the cutting device to a curved surface of the manipulator.

Optionally, the cutting means comprises a first cutting blade configured in use to engage a portion of the cable clamp.

Optionally, the cutting means comprises a second cutting blade, and at least one of the first and second cutting blades is configured to be moveable relative to the other, thereby trapping a portion of the cable clamp therebetween to cut the cable clamp.

Optionally, the first cutting blade is configured to be moveable towards the second cutting blade.

Optionally, the second cutting blade is configured to be stationary.

Optionally, the second cutting blade is configured to be moveable towards the first cutting blade.

According to a second aspect of the invention, there is provided a collection device for catching portions of a cable clamp cut from a pipe string, the collection device comprising a main body comprising: an upper rim; and a lower rim configured to receive the pipe string, wherein the upper rim has a first cross-dimension; the lower rim has a second cross-dimension; and the first cross-dimension is larger than the second cross-dimension.

Advantageously, the collection device prevents portions of the cable clamp cut from the pipe string from falling down the open well.

The collection device may be a junk basket.

The collection device may be positioned below the cable clamp in use. The cable clamp or components which may fall from the cable clamp may be collected in the collection device such that they do not fall into the well.

The first cross-dimension may be taken in a first plane, and the second cross dimension may be taken in a second plane, wherein the first and the second planes are parallel.

The collection device may further comprise a wall portion comprising the upper rim and a base portion comprising the lower rim.

The base portion may further comprise a first base portion and a second base portion inclined relative to the first base portion. The second base portion may comprise the lower rim.

The second base portion may be connected to the wall portion via the first base portion.

The second base portion may extend from the first base portion towards the upper rim of the wall portion.

The lower rim may define an aperture.

The upper rim may be substantially curved.

The upper rim may have a substantially circular cross-section.

The lower rim may be substantially curved.

The lower rim has may have a substantially circular cross-section.

The main body of the collection device may comprise: a first main body portion comprising: a first portion of the upper rim; and a first portion of the lower rim; and a second main body portion comprising: a second portion of the upper rim; and a second portion of the lower rim.

The first and second main body portions may be configured to move relative to each other between a first configuration wherein the first and second lower rim portions enclose the pipe string; and a second configuration wherein an opening for receiving the pipe string into the first and second lower rim portions is defined between the first and second main body portions.

In the first configuration, the first and second main body portions may at least partially overlap.

Advantageously, this prevents portions of the cable clamp cut from the pipe string from falling between the first and second main body portions.

The first and second main body portion may be hingedly connected.

The first and second main body portion may be connected via an elastically deformable material.

The second base portion may be of an elastically deformable material so that the lower rim may more easily receive pipe string of different sizes, and so that the collection device may more easily be moved along a pipe string and passed by components mounted on the pipe string, such as a cable clamp.

A pipe string may be received through the aperture of the second base portion.

According to a third aspect of the invention, there is provided a system for assisting removal of a cable clamp from a pipe string, the system comprising: a manipulator; a first cutting device according to the first aspect of the invention; wherein the first cutting device is operatively attached to the manipulator such that the manipulator can move the first cutting device to cut the cable clamp.

The first cutting device may be operatively attached to the manipulator such that the manipulator may operate the first cutting device.

The system may further comprise a second cutting device according to the first aspect of the invention, wherein the second cutting device is operatively attached to the manipulator such that the manipulator can move the second cutting device to cut the cable clamp.

The second cutting device may be operatively attached to the manipulator such that the manipulator can operate the second cutting device.

The second cutting device may be displaced from the first cutting device such that the first and second cutting devices cut different portions of the cable clamp in use.

The system may further comprise a control unit for automatically controlling the manipulator.

The control unit may be further configured to be autonomous.

The control unit may be further configured to control the first cutting device.

The control unit may be further configured to control the second cutting device.

The system may further comprise one or more sensors configured to detect the position of the cable clamp on the pipe string.

The system may further comprise a cooling means for cooling the first cutting device or the cable clamp.

The cooling means may be configured to supply a cooling fluid to the first cutting device or the cable clamp.

The system may further comprise a cable clamp holding means configured to engage and hold the cable clamp in use such that the cable clamp does not fall after the cable clamp has been cut.

The system may further comprise a junk basket configured to be positioned below the cable clamp in use such that the cable clamp or a portion of the cable clamp can be caught in the junk basket after the cable clamp has been cut.

The system may further comprise a collection device according to the second aspect of the invention.

The collection device may be coupled to the manipulator.

The manipulator may be attached to a tugger line.

The manipulator may comprise a housing configured for suspension from a tugger line, wherein the cutting means is attached to a curved inner surface of the housing.

The tugger line may typically be coupled to a winch on a derrick. The tugger line may be weight balanced, and may dynamically adjust the force on the manipulator suspended from it such that an operator may move the manipulator.

The housing may be configured to be fastenable onto the pipe string.

According to a fourth aspect of the invention, there is provided a method for removal of a cable clamp from a pipe string, the method comprising the steps of: providing a system according to the third aspect of the invention; locating the system in proximity to a pipe string comprising a cable clamp to be removed; moving the manipulator such that the first cutting device is adjacent a portion of the cable clamp to be cut; and operating the first cutting device to cut the cable clamp, thereby releasing the cable clamp from the pipe string.

The method may further comprise the steps of attaching the cable clamp to the system such that the cable clamp will not fall when cut, and moving the cable clamp away from the pipe string and then releasing the cable clamp from the system. The cable clamp may be released from the system outside of the red zone.

The method may further comprise the steps of attaching the manipulator to the pipe string, and detaching the manipulator from the pipe string after the cable clamp has been cut.

The method may further comprise the step of moving the cable clamp away from the pipe string.

### BRIEF DESCRIPTION OF THE DRAWINGS

Embodiments of the invention will now be described with reference to the following drawings, in which:
Figure 1 shows a system for assisting removal of a cable clamp from a pipe string;
Figure 2 shows a detail view of the cable clamp show in Figure 1;
Figures 3 and 4 show alternative views of the system shown in Figure 1;
Figure 5 shows the system detached from the pipe string and cable clamp;
Figure 6 shows a plan view of the system;
Figure 7 shows the system with a rotary table in position;
Figure 8 shows a cutting means for cutting a portion of a cable clamp;
Figure 9 shows another system for assisting removal of a cable clamp from a pipe string;
Figure 10 shows the system in Figure 9 from another angle, and without the pipe string;
Figure 11 shows the system in Figure 10, with detached straps;
Figure 12 shows another cutting means for cutting a portion of a cable clamp;
Figure 13 shows a system for providing automated removal of a cable clamp from a pipe string, wherein the cutting means in Figure 12 is comprised within a housing;
Figure 14 shows a detailed view of the cutting means in Figure 12;
Figure 15 shows the cutting means in Figure 14, wherein a portion of the cable clamp has been cut;
Figure 16 shows the system in Figure 13 comprising a collection device;
Figure 17 shows the cutting means in Figure 8, the cutting means being comprised within a housing;
Figure 18 shows a collection device;
Figure 19 shows a collection device portion; and
Figure 20 shows a system for providing automated removal of a cable clamp from a pipe string, wherein the system comprises a collection device.

For clarity reasons, some elements may in some of the figures be without reference numerals. A person skilled in the art will understand that the figures are just principal drawings. The relative proportions of individual elements may also be distorted.

### DETAILED DESCRIPTION OF THE DRAWINGS

In the following is described examples of a preferred embodiment illustrated in the accompanying drawings.

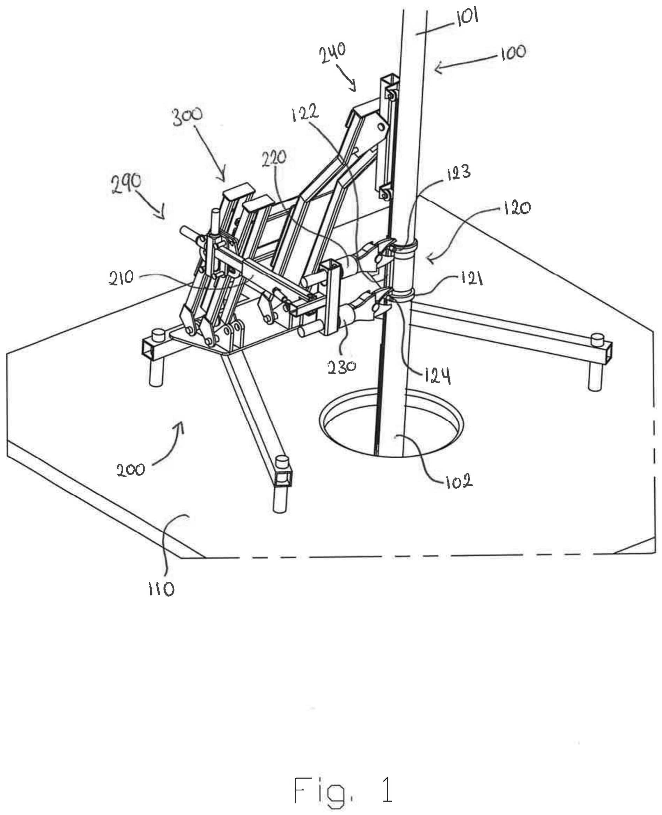

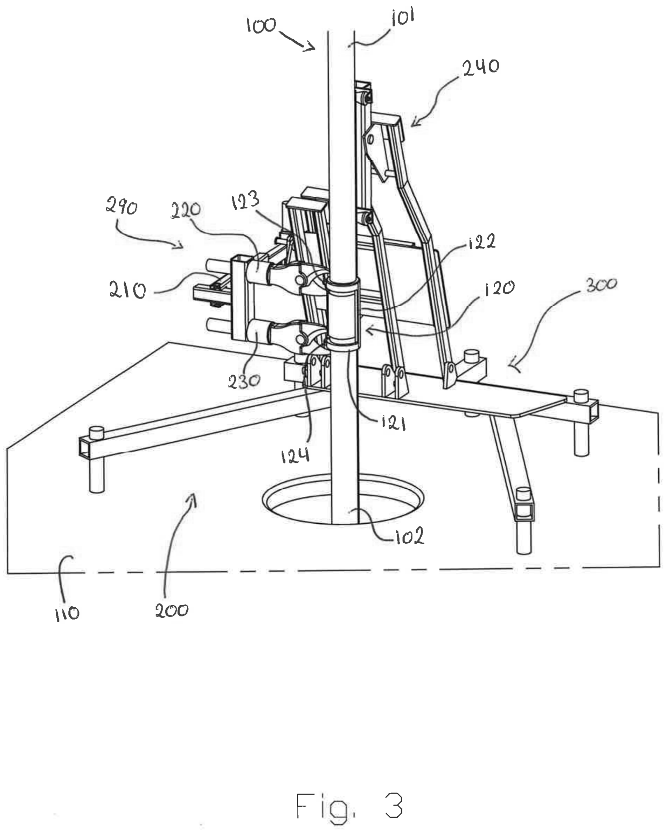

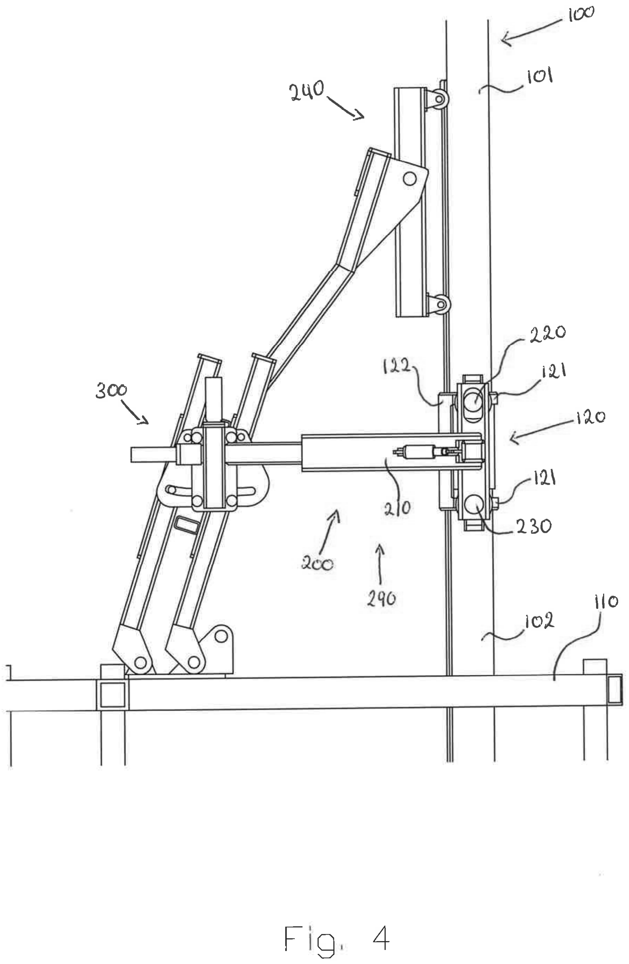

Figures 1, 3 and 4 shows a pipe string 100 passing through a deck 110 of an offshore platform (not shown). The pipe string 100 comprises a plurality of pipe sections, including a first pipe section 101 and a second pipe second 102. Further pipe sections are attached to the second pipe section 102 to provide a long pipe string extending into the wellbore (not shown).

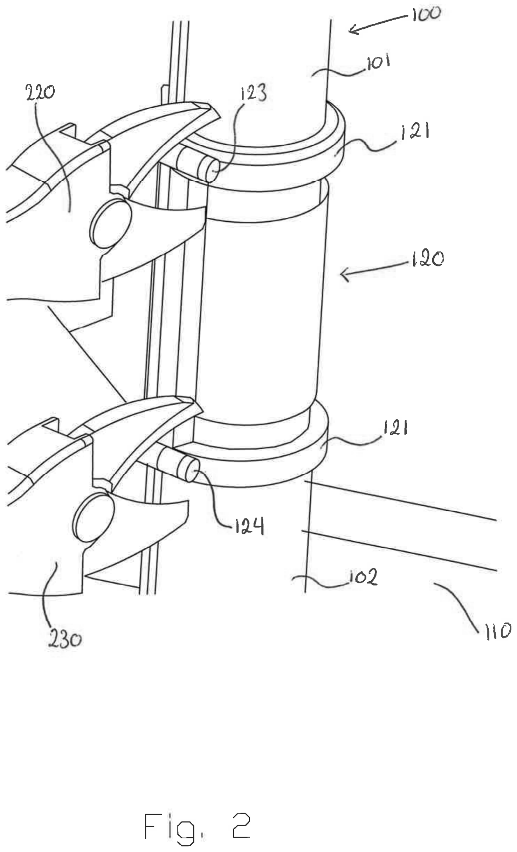

A cable clamp 120 (shown in detailed view in Figure 2) is attached around a connection between the first pipe section 101 and the second pipe section 102. The cable clamp 120 comprises first 121 and second 122 clamping elements which are arranged such that they clamp around the pipe string 100. The clamping elements 121, 122 are configured such that cables run down the side of the pipe string 100 can be held securely against the cable clamp 120 in use.

The cable clamp 120 further comprises first 123 and second 124 bolt connections. In other examples not described herein, the first 123 and second 124 bolt connections may be replaced by alternative fastening means. In some examples the fastening means may be a fixed - i.e. non-releasable fastening means (therefore requiring cutting to be released) or a releasable fastening means as in the presently described bolt connection example.

The clamping elements 121, 122 are hinged such that when the bolt connections 123,124 are released the cable clamp 120 can be removed from the pipe string 100. It will be understood that the cable clamp 120 may fall immediately from the pipe string 100 when the bolt connections 123, 124 are released or the cable clamp 120 may be attached to the pipe string 100 by means of the environment the cable clamp 120 has been subjected to downhole.

In this connection, the cable clamp 120 may be stuck to the pipe string 100 by means of grit, dirt, sand, cement, mud or any other downhole solid or liquid which may have become wedged in or around the cable clamp 120. This cementing of the cable clamp 120 to the pipe string 100 may be more likely in more severe downhole environments. For example, with particularly high pressures and temperatures downhole, the cable clamp 120 may be more likely to become stuck against the pipe string 100. It will be understood that in the present context, the terms used to describe the freeing of the cable clamp 120 from the pipe string 100 are intended to reflect the state of the cable clamp 120 when the fastening means 123, 124 are released. **It** will be appreciated that in some instances the fastening means 123, 124 may be released and the cable clamp 120 may still be attached to the pipe string 100 by means of the aforementioned environmental debris or downhole fluids or solids.

It is intended that the cable clamp 120 being released means substantially free from the pipe string 100 such that when the substance sticking the cable clamp 120 to the pipe string 100 is broken, such as by shaking, moving, twisting, pulling or otherwise manipulating the cable clamp 120, the cable clamp 120 can be completely removed from the pipe string 100. In this connection, although it is described that the hinged connection allows the cable clamp 120 to open immediately once the fastening means 123, 124 have been cut, this may not be the case in all examples. Other alternative ways of cleaning the downhole debris, solids or liquids from the cable clamp 120 may be implemented such as, but not limited to, pressure washing of the cable clamp 120.

In some examples, the cable clamp 120 may not be provided with a hinged connection and may instead be provided with another fastening means instead of a hinged connection. In such examples, the other fastening means may need to be cut in addition to the first fastening means. To do so, the pipe string 100 may be rotated to allow the other fastening means to be cut, as will become apparent in due course.

Referring to Figures 1, 3 and 4, there is also shown a system 200 for providing automated removal of the cable clamp 120. The system 200 comprises major components of: a manipulator 290 comprising a robotic manipulator arm 210; a first end effector 220 and a second end effector 230. The first and second end effectors 220, 230 are in the form of first and second cutting devices 220, 230 for cutting the cable clamp 120 such that the cable clamp 120 can be removed from the pipe string 100.

The first and second cutting devices 220, 230 comprise attachment means such that the first and second cutting devices 220, 230 can be gripped and manipulated by the manipulator arm 210. It will be understood that the attachment means may be provided in various forms. In the presently described example, the attachment means is simply a portion of the cutting devices 220, 230 that can be gripped by the manipulator arm 210. In this connection, a portion of each of the cutting devices 220, 230 is shaped and provided to register with corresponding portions of the manipulator arm 210.

In alternative examples, the attachment means may be another form of connection, such as but not limited to, a magnetic connection, a friction fit connection, a bolted connection, for example. It will also be understood that in other examples the first and second cutting devices 220, 230 may be provided with the manipulator arm 210 as one unitary body. In this regard, the first and second cutting devices 220, 230 may not be separable from the manipulator arm 210 and in such cases the attachment means is provided by the components being unitarily formed. As in the preferred example described herein, by providing the cutting devices 220, 230 as separate components from the manipulator arm 210, the cutting devices 220, 230 can be serviced and replaced more easily. Additionally, in some cases a stronger or sharper cutting device 220, 230 may need to be provided. The provision of the cutting devices 220, 230 as separate components from the manipulator arm 210 allows the cutting devices 220, 230 to be easily changed for different cutting devices where required.

Regardless of the connection between the cutting devices 220, 230 and the manipulator arm 210, the manipulator arm 210 is configured to move the cutting devices 220, 230 into an operative position with respect to the cable clamp 121. That is to say, the manipulator arm 210 is configured to bring the cutting devices 220, 230 into a position whereby they can cut the cable clamp 120 such that the cable clamp 120 can be removed from the pipe string 100. It will be understood that the movement of the manipulator arm 210 may be effected in various ways. Non-limiting examples include hydraulic and/or pneumatic and/or electrical control. The manipulator arm 210 may be fully robotic, partially robotic or fully manually controlled by an operator. The manipulator arm 210 may be configured to provide movement in all directions to allow for accurate positioning and movement of the cutting devices 220, 230. The system may further comprise a support 300 to support the manipulator 290 on the deck 110.

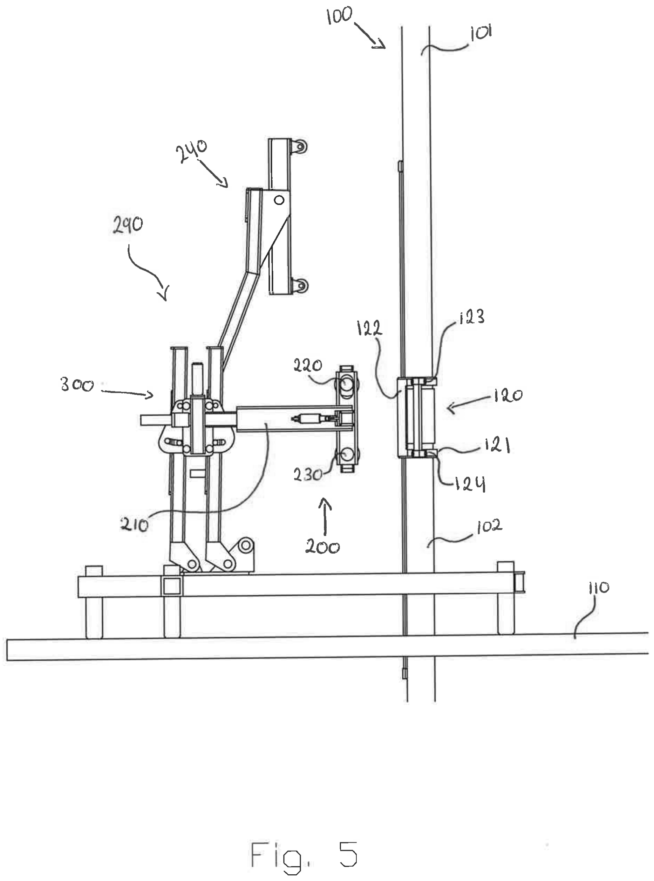

Referring to Figure 5, it can be seen that when the pipe string 100 is brought up from the well through the deck 110 with the system 200 stood off from the pipe string 100. This allows the pipe string 100 to be freely moved up into a position such that the system 200 can be moved adjacent the pipe string 100 to start releasing the cable clamp 120. In some examples the system 200 may be provided with sensors to detect the location of the cable clamp 120. As non-limiting examples only, the system 200 may be provided with optical sensors or alternative proximity sensors to detect where the cable clamp is 120. A control unit may then operate the robotic arm 210 to bring the cutting devices 220, 230 adjacent the portions of the cable clamp 120 to be cut, which in the presently described example are the bolt connections 123, 124.

Once the cutting devices 220, 230 have been moved adjacent the bolts 123, 124, the control unit can operate the cutting devices 220, 230 to perform cutting to release the cable clamp 120. The control unit may be integrated into the manipulator arm 210 for example. Alternatively, the control unit may be located in another position in the system 200. The manipulator arm 210 may be provided with a means for controlling the cutting devices 220, 230. For example, the manipulator arm 210 may comprise a hydraulic, pneumatic, mechanical or electronic configuration to provide operation of the cutting devices 220, 230 when required.

Alternatively, the cutting devices 220, 230 may themselves be provided with the required operating configuration. Alternatively, the cutting devices 220, 230 may be connected to a separate means to provide hydraulic, pneumatic, mechanical or electronic control of the cutting devices 220, 230, said means not being located on or in the manipulator arm 210 or the cutting devices 220, 230 themselves. For example, the cutting devices 220, 230 may be connected to a hydraulic booster such that the cutting devices 220, 230 can be provided with the required hydraulic pressure to make the cuts.

The cutting devices 220, 230 may be remotely controllable via any known and reliable wireless telecommunications protocol such as, but not limited to, Bluetooth or WiFi.

It will be understood that in other examples the cuttings devices 220, 230 may engage and cut another portion or component of the cable clamp 120 such that the cable clamp 120 is released from the pipe string 100. Further details of the cutting of the bolts 123, 124 is provided later.

The control unit may be configured to automatically effect the cutting of the bolts 123, 124 once the cutting devices 220, 230 have been brought into the correct position adjacent the bolts 123, 124 by the manipulator arm 210. Alternatively, an operator may be required to provide the confirmation that the manipulator arm 210 is correctly in position for the cutting to begin.

The system 200 may be provided with a cooling means to supply a cooling fluid to the cutting devices 220, 230 and/or the cable clamp 120. During cutting the cutting devices 220, 230 and/or the cable clamp 120 may become hot and this could cause damage to the cutting devices 220, 230 and/or other equipment. Furthermore, as previously mentioned, the operation is performed in the red zone where there is a heightened risk of explosion and performance of hot work is typically only allowed after a thorough safely assessment. It is therefore highly advantageous if the cutting can be maintained from creating excessive heat which could cause damage to equipment, create an explosion, or require a hot work permit. It is appreciated that in the red zone the acquisition of a hot work permit may be more time consuming than a cold work permit and therefore more expensive.

The system 200 may be provided with a means to hold the cable clamp 120 once the cable clamp 120 has been cut. This allows the cable clamp 120 to be caught and held rather than simply fall from the pipe string 100. A falling cable clamp 120 may create debris which could fall into the well creating a so-called dropped object. Dropped objects can be extremely time consuming and expensive to recover, therefore it is highly advantageous if the system 200 is provided with a means to attach to or hold the cable clamp 120. One or more of the cutting devices 220, 230 may therefore be provided with a cable clamp holding means to engage and hold the cable clamp 120 such that it does not fall. It will be understood that the holding means may be provided in various forms. Non-limiting examples of such holding means may be a mechanical connection or a magnetic connection, for example.

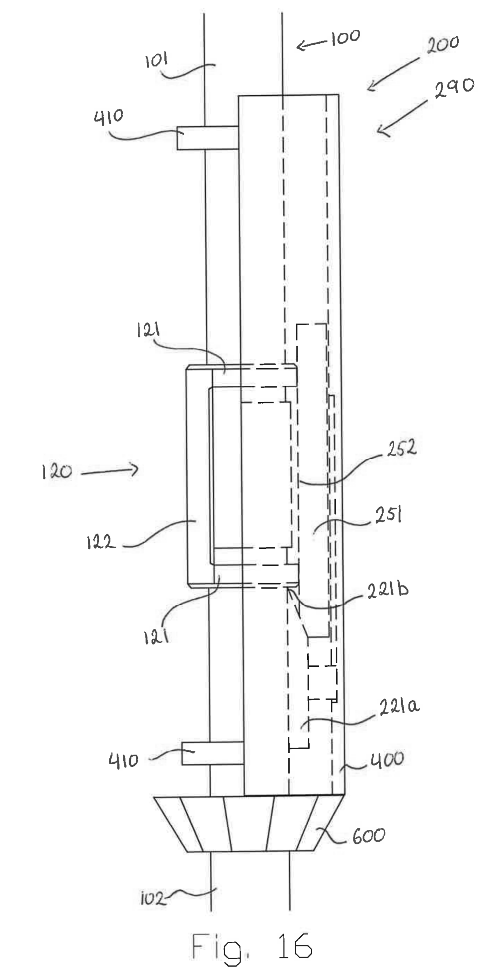

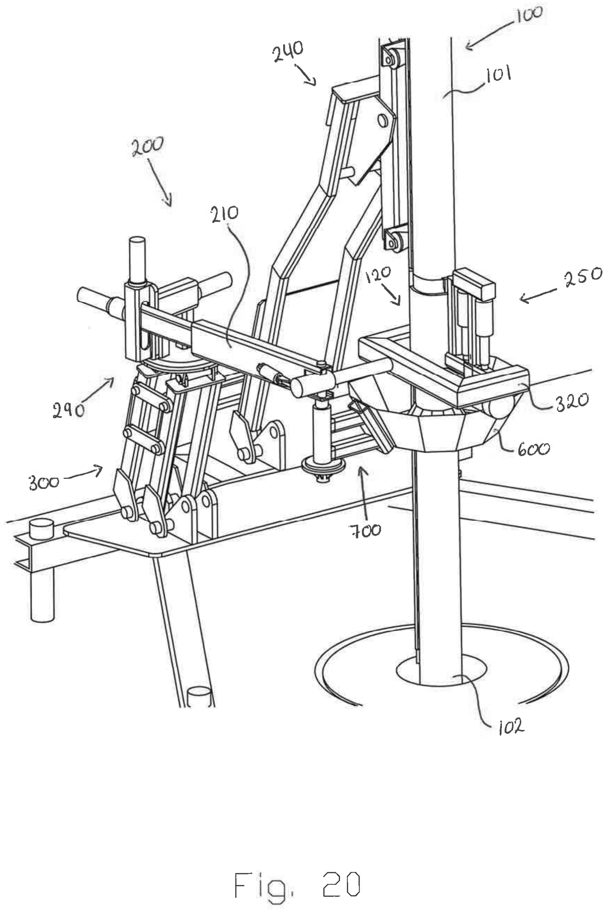

Alternatively, or additionally, the system 200 may be provided with a collection device 600, which may be known as a junk basket (see Figures 16 and 20), configured to be positioned below the cable clamp 120 in use. The cable clamp 120, or components which may fall from the cable clamp 120 may be collected in the junk basket 600 such that they do not fall into the well. The junk basket 600 may be remotely controllable in some examples such that it can be suitably positioned to catch any falling debris or the cable clamp 120. The junk basket 600 may be controllable separately from the manipulator arm 210 such that the junk basket 600 can be removed and emptied regularly while cutting operations continue.

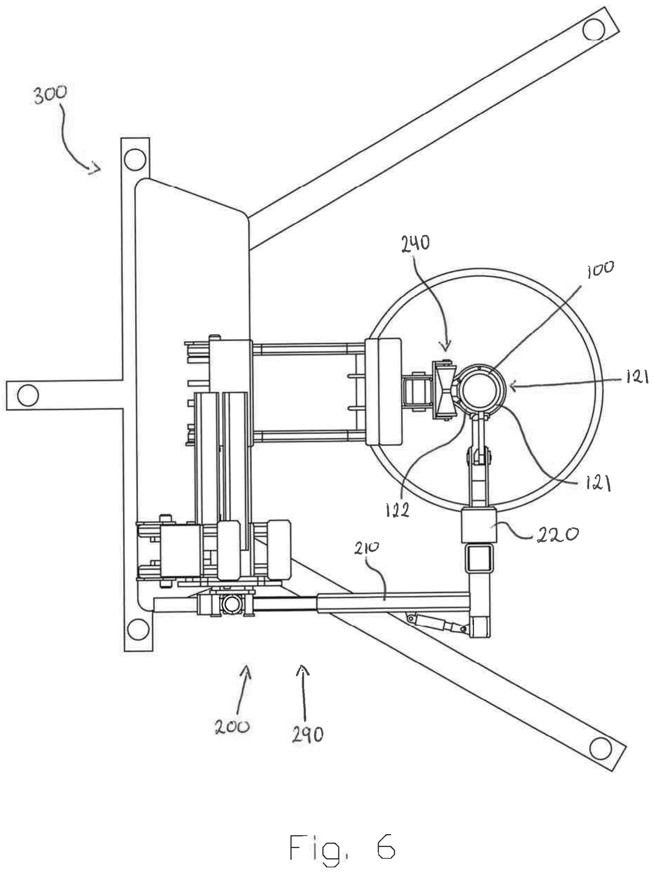

Reference is now made to Figures 1 and 3 to 5, and now also to Figure 6 which shows a plan view of the system 200. The system 200 further comprises a cable support arm 240 configured to be moved into engagement with the cables in use. As shown in the Figures, the cable support arm 240 can hold the cables against the tool string 100 such that the cables cannot fall or become loosely detached from the tool string 100 when the cable clamp 120 is released. Falling or loosely detached cables may be dangerous to personnel and/or may become entangled in the system 200 or other equipment.

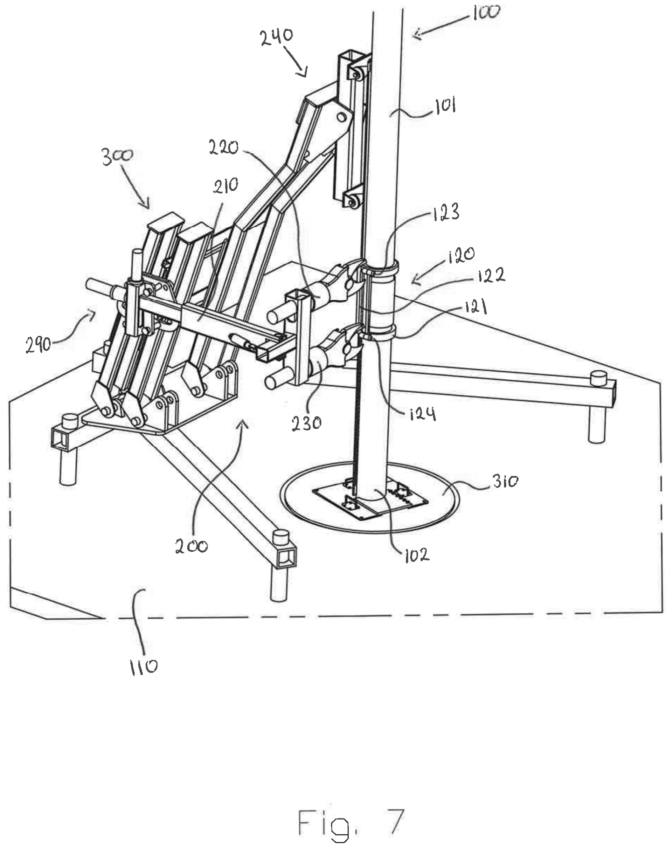

Figure 7 shows the system 200 with a rotary table 310 in position. It will be understood that the system 200 can be operated with the pipe string 100 supported in slips, in the rotary table 310 or with the pipe string 100 through an open hole in the deck 110 (as shown in Figures 1 and 3-6).

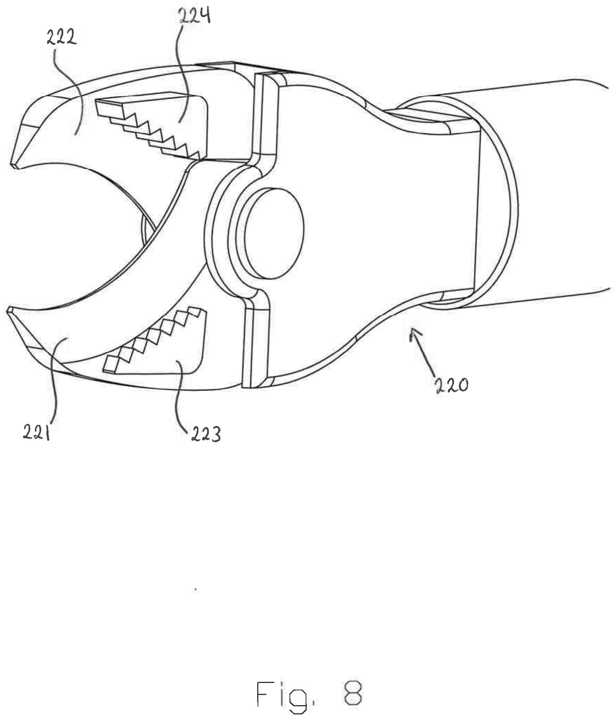

Figure 8 shows a detailed view of the cutting device 220 for cutting a portion of a cable clamp 120. The cutting device 220 comprises cutting means, here shown as a first moveable cutting blade 221 and a second moveable cutting blade 222. The first and second moveable cutting blades 221, 222 are configured in use to engage a portion of the cable clamp 120 as described above.

In some examples, the portion of the cable clamp 120 to be cut is the bolts. In some examples, the bolts may be configured such that they do not fall from the cable clamp 120 when they are cut, thereby avoiding the bolts becoming a dropped object. In some examples, the portion of the cable clamp 120 to be cut may be a specifically weakened portion of the cable clamp 120. In some examples, the portion of the cable clamp 120 to be cut may not be the bolts, thereby ensuring that the bolts do not become a dropped object.

As previously explained, the system 200 may be provided with a means to hold the cable clamp 120 once the cable clamp 120 has been cut. In this connection, it can be seen in Figure 8 that the cutting device 220 is provided with first and second gripping portions 223, 224 located behind the first and second moveable cutting blades 221, 222. The gripping portions 223, 224 are configured to grip and hold the clamping element adjacent the bolt that has been cut by the cutting device 220. In use, the gripping portions 223, 224 may grip and hold the clamping element until the cutting device 220 has been moved away from the pipe string 100 such that the clamping element can be safely released from the gripping portions 223, 224 and will not fall into the wellbore.

It will be appreciated that the manipulator arm 210 shown in the Figures is just one example of a suitable manipulator arm 210 and that the cutting devices 220, 230 may be used with any other suitable manipulator arm 210. In this connection, the manipulator arm 210 in other examples may be a standard manipulator arm 210 provided for use with other equipment.

In some examples the manipulator arm 210 may be provided more distant from the rotary table 310 than in the presently described example. **In** some examples, the manipulator arm 210 may be provided outside of the red zone. In some examples, the manipulator arm 210 may be provided on a wall surrounding the red zone, for example.

Throughout the above description, reference is made to cutting the cable clamp 120. It will be understood that the term cut is used broadly herein to refer to any breaking of the cable clamp 120 such that the cable clamp 120 becomes freed from the tool string 100. In this connection, it will be understood that a portion of the cable clamp 120 may be crushed until the portion breaks in some alternative examples, rather than cut. In this connection, the cutting devices 220, 230 may comprise blunt surfaces configured to provide crushing of a portion of the cable clamp 120.

Although not shown in the Figures, the above-described system 200 may be used in combination with a hole cover to protect the open wellbore from dropped objects.

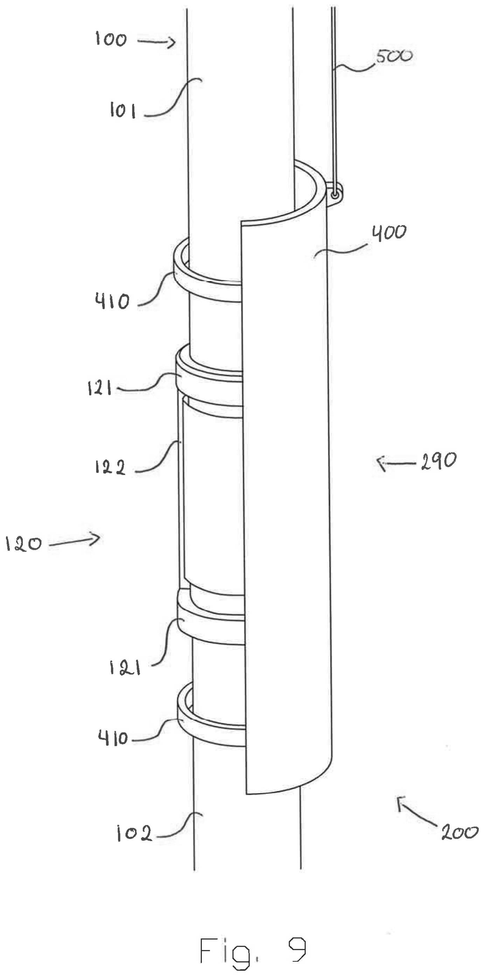

Referring to Figure 9 showing a pipe string 100 including a first pipe section 101 and a second pipe second 102. A cable clamp 120 is attached around a connection between the first pipe section 101 and the second pipe section 102 as previously explained in reference to Figures 1 to 4.

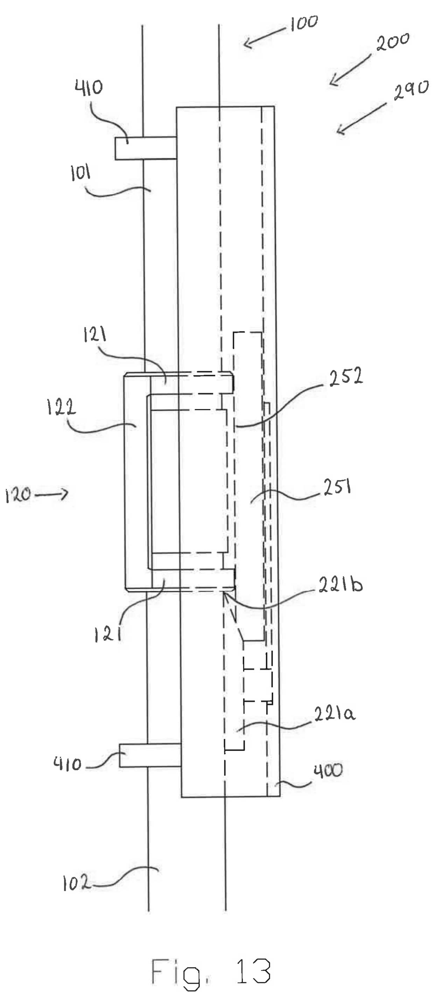

In Figures 9 to 13, there shown a system 200 for providing automated removal of the cable clamp 120. The system 200 comprises major components of: a manipulator 290 comprising a housing 400; a cutting device 250 for cutting the cable clamp 120 such that the cable clamp 120 can be removed from the pipe string 100. The housing 400 has a curved inner surface 420, and the cutting device 250 is attached to the curved inner surface 420 by attachment means. It will be understood that the attachment means may be provided in various forms. In the presently described example, the attachment means is simply bolts fastening the cutting device 250 to the housing 400. In alternative examples, the attachment means may be another form of connection, such as a welded connection between the cutting device 250 and the housing. Preferably, the cutting device 250 is removably attached to the housing 400, such that the cutting device 250 can be serviced and replaced more easily. Additionally, in some cases a stronger or sharper cutting device 250 may need to be provided. The provision of the cutting device 250 as a separate component from the housing 400 allows the cutting device 250 to be easily changed for different cutting devices where required.

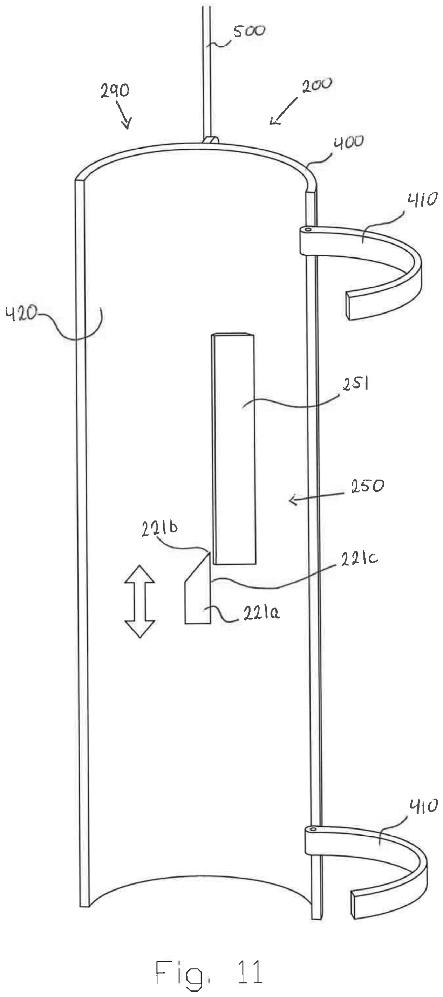

The housing 400 is configured in use to be fastened onto the pipe string 100. The housing 400 may be fastened by the use of a fastening means, here shown as two straps 410. The fastening means may be hinged as shown in Figure 11 for easy fastening and unfastening of the housing 400 to the pipe string 100. The system further comprises a tugger line 500, from which the housing 400 is suspended, as shown in Figures 8 to 11. The tugger line 500 is typically coupled to a winch on a derrick (not shown). When the pipe string 100 is in a position above the deck 110 such that the system 200 can used to release the cable clamp 120, the housing 400, suspended from the tugger line 500, may be moved adjacent to the pipe string 100 and the cable clamp 120 by an operator. The housing 400 may then be fastened to the pipe string 100. Once the housing 400 is in place, and the cutting device 250 is adjacent to the cable clamp 120, the operator may step back, and a control unit can operate the cutting device 250 to perform cutting to release the cable clamp 120. The control unit may be integrated into the housing 400 for example. Alternatively, the control unit may be located in another position in the system 200. The housing 400 may be provided with a means for controlling the cutting device 250. For example, the housing 400 may comprise a hydraulic, pneumatic, mechanical or electronic configuration to provide operation of the cutting device 250 when required.

The cables may be attached to a roller wheel installed on the derrick above the deck 110 (roller wheel and derrick not shown) so that the cables cannot fall from the tool string 100 when the cable clamp 120 is released.

Although not shown in all the Figures, the housing 400 is preferably suspended on a tugger line 500. Alternatively, the housing 400 is coupled to a support 300 (not shown) for supporting the housing 400 on the deck 110.

Alternatively, the cutting device 250 may itself be provided with the required operating configuration. Alternatively, the cutting device 250 may be connected to a separate means to provide hydraulic, pneumatic, mechanical or electronic control of the cutting device 250, said means not being located on or in the housing 400 or the cutting devices 250 itself. For example, the cutting device 250 may be connected to a hydraulic booster such that the cutting device 250 can be provided with the required hydraulic pressure to make the cuts.

The cutting device 250 may be remotely controllable via any known and reliable wireless telecommunications protocol such as, but not limited to, Bluetooth or WiFi.

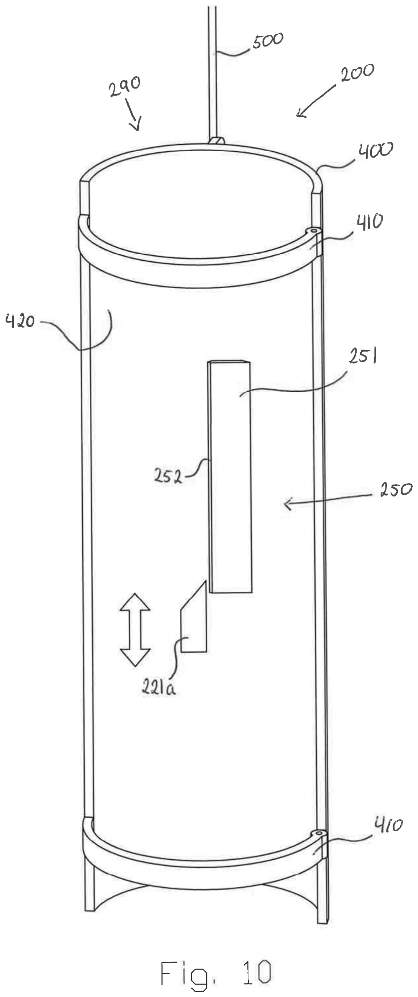

Referring now to Figures 10 to 15, showing the cutting device 250 within the housing 400. The cutting device comprises cutting means, here shown as a moveable blade 221a and a stationary cutting blade 251. The moveable cutting blade 221a is configured in use to move relative to the stationary cutting blade 251, as indicated by the arrow in Figures 10 and 11, thereby trapping a portion of the cable clamp 120 therebetween to cut the cable clamp 120.

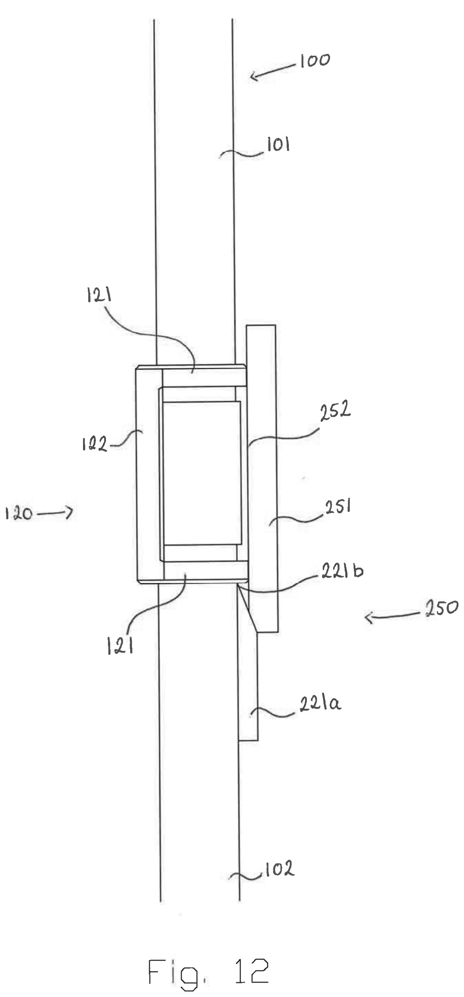

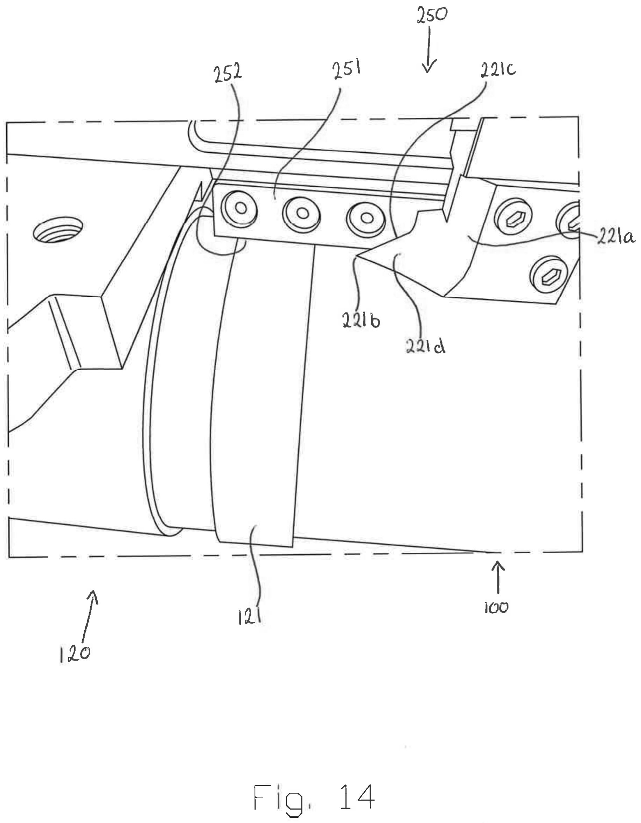

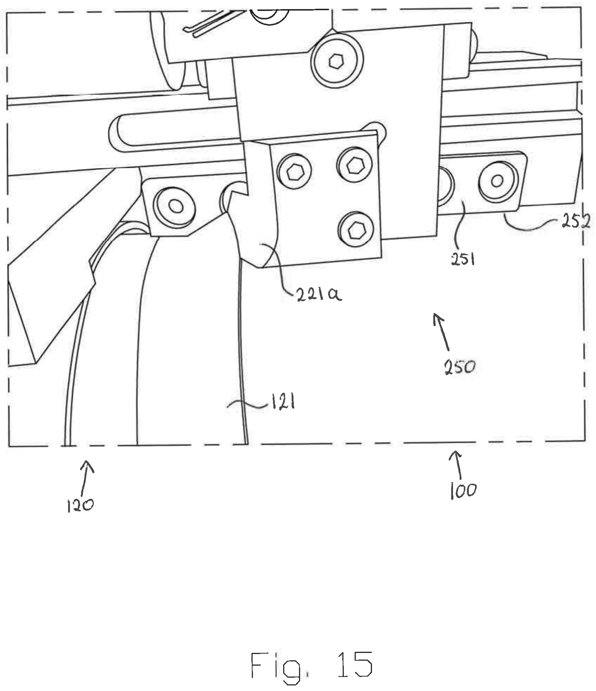

In the illustrated example, as best seen in Figures 12 to 15, the cutting device 250 is configured for cutting the first clamping elements 121. Figure 12 shows the moveable blade 221a and the stationary cutting blade 251 without the housing 400 for clarity. For cutting a first clamping element 121, the stationary cutting blade 251 is positioned adjacent to the first clamping elements 121. The stationary cutting blade 251 has a sharp edge 252 facing towards the pipe string 100. The moveable cutting blade 221a is positioned adjacent to the pipe string 100. To cut a first clamping element 121, the moveable cutting blade 221a is moved along the stationary cutting blade 251, such that a tip 221b moves between the pipe string 100 and the first clamping element 121 to be cut (see Figures 14 and 15). The tip 221b of the moveable cutting blade lifts a portion of the first clamping element 121, trapping the portion between the sharp edge 252 of the stationary cutting blade 251 and the moveable cutting blade 221a. The moveable cutting blade 221a is moved along the stationary cutting blade 251 until the first clamping element 121 is cut. The cutting device may then be moved to a further first clamping element 121 to cut the further first clamping element 121 to release the clamp 120 from the pipe string 100.

The details of the cutting device 250 are shown in Figure 14. The moveable blade 221a comprises a flat side 221c adjacent or abutting the stationary cutting blade 251. The moveable blade 221a further comprises a curved side 221d that is inclined from the tip 221b. The tip 221b and the curved side 221d may push the portion of the cable clamp 120 to be cut, towards the sharp edge 252 of the stationary cutting blade 251. The flat side 221c also comprises a sharp upper rim such that the portion of the cable clamp 120 to be cut is trapped between the sharp upper rim of the moveable cutting blade 221a and the sharp edge 252 of the stationary cutting blade 251. Preferably, the stationary cutting blade 251 and the moveable cutting blade 221a are removably attached to the cutting device 250, such that the stationary cutting blade 251 and the moveable cutting blade 221a may be serviced and replaced more easily.

Although the cutting device 250 is described in relation to a housing 400 onto which the cutting device 250 is attached, it will be understood that the cutting device 250 may also comprise attachment means configured to attach the cutting device 250 to a manipulator arm 210. This is illustrated in Figure 20, showing the cutting device 250 coupled to a frame 320, the frame 320 being coupled to a manipulator arm 210.

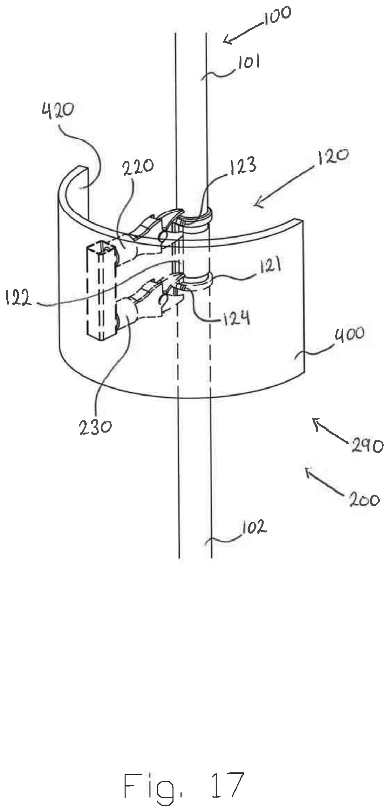

Figure 9 shows the cutting means 220, 230 as previously described, comprised within a housing 400, wherein the cutting means 220, 230 are attached to an inner curved surface 420 of the housing 400. The housing 400 limits movement of the cable clamp 120 once it has been cut, causing cut portions to fall downwards rather than outwards onto the deck. Typically, this inner curved surface 420 of the housing 400 is sized such that it corresponds to a curvature of the cable clamp 120 to be cut, but this is not required as can be seen in Figure 17. The housing 400 is suspended from a tugger line (not shown in Figure 8), and may be manually moved to the pipe string 100 to align the cutting means 220, 230 with the cable clamp 120. The housing 400 may be fastened to the pipe string 100 by suitable means (not shown) before cutting the cable clamp 120. The cutting operation by the cutting means 220, 230 has previously been described.

The system 200 may be provided with a collection device 600, here shown as a junk basket 600 (see Figures 16 and 20), configured to be positioned below the cable clamp 120 in use. The cable clamp 120, or components which may fall from the cable clamp 120 may be collected in the junk basket such that they do not fall into the well. The junk basket 600 may be connected to the housing 400 (Figure 16), such that cut portions of the cable clamp 120 fall downwards from a bottom of the housing 400 directly into the junk basket 600, or the manipulator arm 210 (Figure 20). Alternatively, the junk basket 600 may be connected the support 300 (not shown), or the junk basket 600 may be separate from the housing 400 or the manipulator arm 210.

The junk basket 600 may be remotely controllable in some examples such that it can be suitably positioned to catch any falling debris or the cable clamp 120. The junk basket 600 may be controllable separately from the manipulator 290 such that the junk basket 600 can be removed and emptied regularly while cutting operations continue.

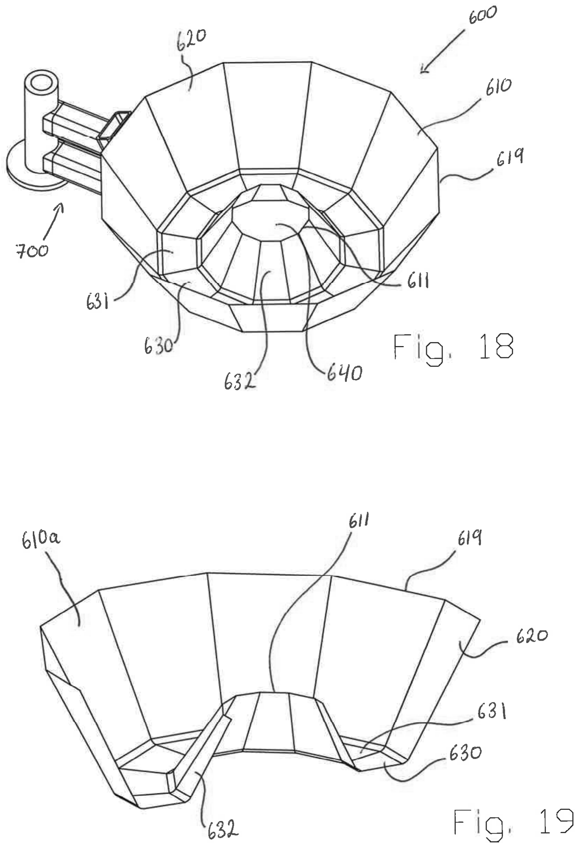

Figure 18 shows an example of a collection device or a junk basket 600 for catching portions of a cable clamp 120 or other debris. The collection device 600 comprises a main body 610. The main body comprises an upper rim 619 and a lower rim 611, wherein the lower rim 611 is configured to receive the pipe string 100. The upper rim 619 has a first cross-dimension and the lower rim 611 has a second cross-dimension. The first cross-dimension of the upper rim 619 is larger than the second cross dimension of the lower rim 611. The first cross-dimension is taken in a first plane, and the second cross-dimension is taken in a second plane, wherein the first and second planed are parallel. The main body 610 further comprises a wall portion 620 comprising the upper rim 619, and a base portion 630 comprising the lower rim 611. The wall portion 620 and the base portion 630 form an inner volume of the main body 610. In the illustrated example, the wall portion 620 and the base portion 630 are unitarily formed. The base portion 630 further comprises a first base portion 631 and a second base portion 632 that comprises the lower rim 611. In the illustrated example, the wall portion 620 is connected to the second base portion 632 via the first base portion 631. The second base portion 632 extends from the first base portion 631 towards the upper rim 619 of the wall portion 620. The lower rim defines an aperture 640.

To mount the collection device 600 to a pipe string 100, the aperture 640 may receive an end of the pipe string 100 such that the internal volume of the main body 610 faces upwards. The collection device 600 may be moved further downwards until it is positioned underneath a cable clamp 120. The second base portion 632 extends from the first base portion 631 towards the upper rim 619 of the wall portion 620 to ease the downwards movement of the junk basket 600 relative to the pipe string 100.

Preferably, the main body 610 comprises a first main body portion 610a comprising a first portion of the upper rim 619 and a first portion of the lower rim 611, and a second main body portion comprising a second portion of the upper rim 619 and a second portion of the lower rim 611. The first main body portion 610a is shown in Figure 19. It will be understood that the second main body portion is similar or identical to the first main body portion 610a.

The first and second main body portions 610a are configured to move relative to each other between a first configuration wherein the first and second portions of the lower rim 611 enclose the pipe string 120 (not shown), and a second configuration wherein an opening for receiving the pipe string 100 into the first and second portions of the lower rim 611 is defined between the first and second main body portions 610a (not shown). The first and second main body portions 610a preferably at least partially overlap such that no gap between the portions 610a is formed. This may prevent components of the cable clamp 120 or other debris falling through the main body 610.

The first and second main body portions 610a may be separated components, or they may be connected. The first and second main body portions 610a may be hingedly connected or connected via an elastically deformable material. The first and second main body portions 610a may be manually mounted to and retracted from the pipe string 100. The first and second main body portions 610a may be mounted to and retracted from the pipe string 100 by means of hydraulic and/or pneumatic and/or electrical control.

The collection device 600 further comprises a fastening mechanism 700 for fastening the main body 610 to the manipulator 290. The collection device 600 may for example be connected to the manipulator arm 210, the housing 400 or the support 300. The collection device 600 may be fully robotic, partially robotic or fully manually controlled by an operator.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

### CLAUSES

Clause 1. A moveable cutting device (220, 230, 250) for providing automated removal of a cable clamp (120) from a pipe string (100), the cutting device (220, 230, 250) comprising:
   an attachment means configured to attach the cutting device (220, 230, 250) to a manipulator (290) for moving and/or operating the cutting device (220, 230, 250) in use; and
   a cutting means (221, 222, 221a, 251) configured in use to be operated to cut a portion of the cable clamp (120) such that the cable clamp (120) is released from the pipe string (100).
Clause 2. The moveable cutting device (220, 230) according to clause 1, wherein the cutting means (221, 222, 221a, 251) is configured in use to be operated by the manipulator (290) to cut a portion of the cable clamp (120).
Clause 3. The moveable cutting device (220, 230) according to clauses 1 or 2, wherein the attachment means is configured to attach the cutting device (220, 230, 221a, 251) to a manipulator arm (210) of the manipulator (290).
Clause 4. The moveable cutting device (220, 230) according to clauses 1 or 2, wherein the attachment means is configured to attach the cutting device (220, 230, 250) to a curved surface (420) of the manipulator (290).
Clause 5. The moveable cutting device (220, 230) according to any preceding clause, wherein the cutting means (221, 222, 221a, 251) comprises a first cutting blade configured in use to engage a portion of the cable clamp (120).
Clause 6. The moveable cutting device (220, 230) according to clause 5, wherein the cutting means (221, 222, 221a, 251) comprises a second cutting blade, and wherein at least one of the first and second cutting blades is configured to be moveable relative to the other, thereby trapping a portion of the cable clamp (120) therebetween to cut the cable clamp (120).
Clause 7. The moveable cutting device (220, 230) according to clause 6, wherein the first cutting blade is configured to be moveable towards the second cutting blade.
Clause 8. The moveable cutting device (220, 230, 250) according to clause 6, wherein the second cutting blade is configured to be stationary.
Clause 9. The moveable cutting device (220, 230, 250) according to clause 6 or 7, wherein the second cutting blade is configured to be moveable towards the first cutting blade.
Clause 10. A collection device (600) for catching portions of a cable clamp (120) cut from a pipe string (100), the collection device (600) comprising:
   a main body comprising (610):
      an upper rim (619); and
      a lower rim (611) configured to receive the pipe string (100), wherein
   the upper rim (619) has a first cross-dimension;
   the lower rim (611) has a second cross-dimension; and
   the first cross-dimension is larger than the second cross-dimension.
Clause 11. The collection device (600) of clause 10, wherein
   the first cross-dimension is taken in a first plane;
   the second cross-dimension is taken in a second plane; and
   the first and second planes are parallel.
Clause 12. The collection device (600) of clause 10 or 11, wherein the main body (610) further comprises:
   a wall portion (620) comprising the upper rim (619); and
   a base portion (630) comprising the lower rim (611).
Clause 13. The collection device (600) of clause 12, wherein the base portion (630) further comprises:
   a first base portion (631); and
   a second base portion (632) inclined relative to the first base portion, said second base portion (632) comprising the lower rim (611).
Clause 14. The collection device (600) of clause 13, wherein the second base portion (632) is connected to the wall portion (620) via the first base portion (631).
Clause 15. The collection device (600) of clause 14, wherein the second base portion (632) extends from the first base portion (631) towards the upper rim (619) of the wall portion (620).
Clause 16. The collection device (600) of any of clauses 10 to 15, wherein the lower rim (611) defines an aperture (640).
Clause 17. The collection device (600) of any of clauses 10 to 16, wherein the upper rim (619) is substantially curved.
Clause 18. The collection device of any of clauses 10 to 17, wherein the upper rim (619) has a substantially circular cross-section.
Clause 19. The collection device of any of clauses 10 to 18, wherein the lower rim (611) is substantially curved.
Clause 20. The collection device of any of clauses 10 to 19, wherein the lower rim (611) has a substantially circular cross-section.
Clause 21. The collection device (600) of any of clauses 10 to 20, wherein the main body (610) comprises:
   a first main body portion (610a) comprising:
      a first portion of the upper rim (619); and
      a first portion of the lower rim (611); and
   a second main body portion comprising:
      a second portion of the upper rim (619); and
      a second portion of the lower rim (611).
Clause 22. The collection device (600) of clause 21, wherein the first and second main body portions (610a) are configured to move relative to each other between
   a first configuration wherein the first and second portions of the lower rim (611) enclose the pipe string (120); and
   a second configuration wherein an opening for receiving the pipe string (100) into the first and second portions of the lower rim (611) is defined between the first and second main body portions (610a).
Clause 23. The collection device (600) of clause 22, wherein in the first configuration, the first and second main body portions (610a) at least partially overlap.
Clause 24. The collection device (600) of any of clauses 21 to 23, wherein the first and second main body portions (610a) are hingedly connected.
Clause 25. The collection device (600) of any of clauses 21 to 24, wherein the first and second main body portions (610a) are connected via an elastically deformable material.
Clause 26. A system (200) for assisting removal of a cable clamp (120) from a pipe string (100), the system comprising:
   a manipulator (290);
   a first cutting device (220, 230, 250) according to any of clauses 1 to 25, wherein
   the first cutting device (220, 230, 250) is operatively attached to the manipulator (290) such that the manipulator (290) can move the first cutting device (220, 230, 250) to cut the cable clamp (120).
Clause 27. The system (200) according to clause 26, wherein the first cutting device (220, 230, 250) is operatively attached to the manipulator (290) such that the manipulator (290) can operate the first cutting device (220, 230, 250).
Clause 28. The system (200) according to clause 26 or 27, further comprising a second cutting device (220, 230, 250) according to any of clauses 1 to 9, wherein the second cutting device (220, 230, 250) is operatively attached to the manipulator (290) such that the manipulator (290) can move the second cutting device (220, 230, 250) to cut the cable clamp (120).
Clause 29. The system (200) according to clause 28, wherein the second cutting device (220, 230, 250) is operatively attached to the manipulator (290) such that the manipulator (290) can operate the second cutting device (220, 230, 250).
Clause 30. The system (200) according to clauses 28 or 29, wherein the second cutting device (220, 230, 250) is displaced from the first cutting device (220, 230, 250) such that the first and second cutting devices (220, 230, 250) cut different portions of the cable clamp (120) in use.
Clause 31. The system (200) according to any of clauses 26 to 30, further comprising a control unit configured to control the manipulator (290).
Clause 32. The system (200) according to clause 31, wherein the control unit is configured to be autonomous.
Clause 33. The system (200) according to clauses 31 or 32, wherein the control unit is further configured to control the first cutting device (220, 230, 250).
Clause 34. The system (200) according to any one of clauses 31 to 33 when dependent on clause 28, wherein the control unit is further configured to control the second cutting device (220, 230, 250).
Clause 35. The system (200) according to any one of clauses 26 to 34, further comprising one or more sensors configured to detect the position of the cable clamp (120) on the pipe string (100).
Clause 36. The system (200) according to any one of clauses 26 to 35, further comprising a cooling means for cooling the first cutting device (220, 230, 250) or the cable clamp (120).
Clause 37. The system (200) according to clause 36, wherein the cooling means is configured to supply a cooling fluid to the first cutting device (220, 230, 250) or the cable clamp (120).
Clause 38. The system (200) according to any one of clauses 26 to 37, further comprising a cable clamp holding means configured to engage and hold the cable clamp (120) in use such that the cable clamp (120) does not fall after the cable clamp (120) has been cut.
Clause 39. The system (200) according to any of clauses 26 to 37, further comprising a collection device (600) according to any one of clauses 10 to 25.
Clause 40. The system (200) according to clause 39, wherein the collection device (600) is coupled to the manipulator (290).
Clause 41. The system (200) according to any of clauses 26 to 40, wherein the manipulator (290) is attached to a tugger line (500).
Clause 42. The system (200) according to clause 41, wherein the manipulator (290) comprises a housing (400) configured for suspension from a tugger line (500), wherein the cutting means (221, 222, 221a, 251) is attached to a curved inner surface (420) of the housing.
Clause 43. The system (200) according to clause 42, wherein the housing (400) is configured to be fastenable onto the pipe string (100).
Clause 44. A method for removal of a cable clamp (120) from a pipe string (100), the method comprising the steps of:
   a) providing a system (200) according to any one of clauses 26 to 43;
   b) locating the system (200) in proximity to a pipe string (100) comprising a cable clamp (120) to be removed;
   c) moving the manipulator (290) such that the first cutting device (220, 230, 250) is adjacent a portion of the cable clamp (120) to be cut; and
   d) operating the first cutting device (220, 230, 250) to cut the cable clamp (120), thereby releasing the cable clamp (120) from the pipe string (100).
Clause 45. The method according to clause 44, further comprising:
   a step b1), between steps b) and c), of attaching the cable clamp (120) to the system (200) such that the cable clamp (120) will not fall when cut; and
   a step d1), after step d), of releasing the cable clamp (120) from the system (200).
Clause 46. The method according to clauses 44 or 45, further comprising:
   a step b2) between steps b) and c), of attaching the manipulator (290) to the pipe string (100); and
   a step d2), after step d), of detaching the manipulator (290) from the pipe string (100).
Clause 47. The method according to any one of clauses 44 to 46, further comprising a step d3), after step d), of moving the cable clamp (120) away from the pipe string (100).

## Claims

1. A collection device (600) for catching portions of a cable clamp (120) cut from a pipe string (100), the collection device (600) comprising:
a main body comprising (610):
an upper rim (619); and
a lower rim (611) configured to receive the pipe string (100), wherein
the upper rim (619) has a first cross-dimension;
the lower rim (611) has a second cross-dimension; and
the first cross-dimension is larger than the second cross-dimension.

2. The collection device (600) of claim 1, wherein
the first cross-dimension is taken in a first plane;
the second cross-dimension is taken in a second plane; and
the first and second planes are parallel.

3. The collection device (600) of claim 1 or 2, wherein the main body (610) further comprises:
a wall portion (620) comprising the upper rim (619); and
a base portion (630) comprising the lower rim (611).

4. The collection device (600) of claim 3, wherein the base portion (630) further comprises:
a first base portion (631); and
a second base portion (632) inclined relative to the first base portion, said second base portion (632) comprising the lower rim (611).

5. The collection device (600) of claim 4, wherein the second base portion (632) is connected to the wall portion (620) via the first base portion (631).

6. The collection device (600) of claim 5, wherein the second base portion (632) extends from the first base portion (631) towards the upper rim (619) of the wall portion (620).

7. The collection device (600) of any of claims 1 to 6, wherein the lower rim (611) defines an aperture (640).

8. The collection device (600) of any of claims 1 to 7, wherein at least one of the following is substantially curved: upper rim (619), lower rim (611)

9. The collection device of any of claims 1 to 8, wherein the upper rim (619) and/or the lower rim (611) have a substantially circular cross-section.

10. The collection device (600) of any of claims 1 to 9, wherein the main body (610) comprises:
a first main body portion (610a) comprising:
a first portion of the upper rim (619); and
a first portion of the lower rim (611); and
a second main body portion comprising:
a second portion of the upper rim (619); and
a second portion of the lower rim (611).

11. The collection device (600) of claim 10, wherein the first and second main body portions (610a) are configured to move relative to each other between
a first configuration wherein the first and second portions of the lower rim (611) enclose the pipe string (120); and
a second configuration wherein an opening for receiving the pipe string (100) into the first and second portions of the lower rim (611) is defined between the first and second main body portions (610a).

12. The collection device (600) of claim 11, wherein in the first configuration, the first and second main body portions (610a) at least partially overlap.

13. The collection device (600) of any of claims 10 to 12, wherein the first and second main body portions (610a) are connected via at least one of the following means: hingedly connected, connected via an elastically deformable material.

14. A system (200) for assisting removal of a cable clamp (120) from a pipe string (100), the system comprising:
a collection device (600) according to any of claims 1 to 13;
a manipulator (290);
a cutting device (220, 230, 250) for providing automated removal of a cable clamp (120) from a pipe string (100), the cutting device (220, 230, 250) comprising:
an attachment means configured to attach the cutting device (220, 230, 250) to the manipulator (290) for moving and/or operating the cutting device (220, 230, 250) in use; and
a cutting means (221, 222, 221a, 251) configured in use to be operated to cut a portion of the cable clamp (120) such that the cable clamp (120) is released from the pipe string (100)
wherein
the cutting device (220, 230, 250) is operatively attached to the manipulator (290) such that the manipulator (290) can move the cutting device (220, 230, 250) to cut the cable clamp (120).

15. A method for cutting a cable clamp (120) from a pipe string (100) and catching at least a portion of the cable clamp (120), comprising the steps of:
a) providing a collection device (600) according to any of claims 1 to 13;
b) positioning the collection device (600) below the cable clamp (120);
c) cutting the cable clamp (120) from the pipe string (100); and
d) catching at least a portion of the cable clamp (120) in the collection device (600).

16. The method according to claim 15, comprising an additional step before step a), or before step b) or before step c), or before steps a), b) and c), of providing:
a manipulator (290);
a cutting device (220, 230, 250) for providing automated removal of the cable clamp (120) from the pipe string (100), the cutting device (220, 230, 250) comprising:
an attachment means configured to attach the cutting device (220, 230, 250) to the manipulator (290) for moving and/or operating the cutting device (220, 230, 250) in use; and
a cutting means (221, 222, 221a, 251) configured in use to be operated to cut a portion of the cable clamp (120) such that the cable clamp (120) is released from the pipe string (100)
wherein
the cutting device (220, 230, 250) is operatively attached to the manipulator (290) such that the manipulator (290) can move the cutting device (220, 230, 250) to cut the cable clamp (120);
wherein step c) of the method further comprises use of the cutting device (220, 230, 250) to cut the cable clamp (120) from the pipe string (100).
